# EUROPEAN PATENT SPECIFICATION

(11) **EP 2 725 337 B1**
(45) Date of publication and mention of the grant of the patent: **11.04.2018**
(21) Application number: 12400043.1
(22) Date of filing: 24.10.2012
(51) Int. Cl.: G01M 13/02, G01M 5/00, G01M 99/00, G07C 3/00

(54) **Fatigue management system and method of operating such a fatigue management system**
Ermüdungsverwaltungssystem und Verfahren zum Betrieb eines solchen Ermüdungsverwaltungssystems
Système de gestion de fatigue et procédé de fonctionnement d'un tel système de gestion de fatigue

(43) Date of publication of application: 30.04.2014
(73) Proprietor: AIRBUS HELICOPTERS DEUTSCHLAND GmbH, 86609 Donauwörth (DE)
(72) Inventor: Hoffmann, Falk, 85625 Glonn (DE); Dekker, Sam, 1019JX Amsterdam (NL); Bendisch, Stefan, 80337 München (DE)
(74) Representative: Schmid, Rudolf

(56) References cited:
- DE-A1-102005 018 123
- US-A1- 2012 101 776

## Description

The invention relates to a fatigue management system of at least one aircraft with the features of claim 1 and to a method of operating said fatigue management system with the features of claim 3.

Aircraft have a large number of structural components that are subject to intense structural usage. These components are often expensive to replace. Since the structural components may have a measurable and predictable life cycle, prediction of component deterioration so as to anticipate a potential failure facilitates prolonged operations. Early detection of potential failures or fractures within a structural component provides the ability to perform preventative maintenance and avoid potential component failure.

After an aircraft is sold to a customer, the Original Equipment Manufacturer (OEM) is not provided with the information necessary to accurately determine the spent fatigue life of an individual component of an individual aircraft after an arbitrary time period of usage. According to the state-of-the-art the OEM assumes a single aircraft Standard Mission Profile that is representative and conservative for all aircrafts sold to any customers. This assumed Standard Mission Profile is then used to determine a fixed fatigue damage accumulation rate for all aircrafts sold. As said assumed Standard Mission Profile has to be conservative for all aircrafts said assumed fatigue damage accumulation rate leads to replacement of components after a fixed number of flight hours on a given aircraft, regardless of the actual structural usage of the components on the given aircraft. Therefore said assumed fatigue damage accumulation rate causes unnecessary costs for the customer and reduced availability of the aircraft concerned.

It is impractical to equip an aircraft deployed for field use with load sensors on all structural elements, as there is substantial material and labour cost associated with the installation of load sensors. The addition of sensors and wiring to convey sensor signals adds substantial weight to the aircraft. Furthermore, the durability of conventional sensors for load measurement may be limited.

The documents DE 43 36 588 A and US 2011/0264310 A1 disclose a helicopter equipped with extensive physical measurement equipment, such as strain gauges, that record component load histories. With this helicopter a series of Load Classification Flights are performed. In these flights all elements that comprise the full Standard Mission Profile of a helicopter are represented. Additionally, the helicopter flight parameters that are commonly available, amongst others through the Flight Data Computer and avionics system, are recorded simultaneously during the Load Classification Flights. Knowing which set of helicopter flight parameters belongs to which flight regime, a neuronal network model is build that correlates recorded helicopter flight parameters with the associated flight regime. A helicopter in the customer fleet is equipped with a small device enabling the (real time) recording and transfer of helicopter flight information.

The document US 2011/0264310 discloses an equivalent fatigue damage calculation procedure performed on the full time aircraft state history.

The document US 6 480 792 B1 discloses load templates, and computation of the component load from aircraft flight parameters, computed by means of Finite Element Analysis and ground based aircraft frame fatigue tests. The templates are computed for various aircraft flight and configuration parameters. An aircraft in the customer fleet is equipped with a small device enabling the (real time) recording and transfer of aircraft flight information.

The recorded aircraft flight information is multiplied with the applicable templates to yield the true component load history. Standard fatigue damage calculation methods are applied to the load signal to result into the true accumulated component fatigue damage.

The document US 2011/0112878 A1 discloses an aircraft (helicopter) for load classification flights, said aircraft being equipped with extensive physical measurement equipment, such as strain gauges, that record component load histories. With this machine a series of test flights are performed. In these flights all elements that comprise the full Standard Mission Profile are represented.

Additionally, the aircraft flight parameters that are commonly available, amongst others through the Flight Data Computer and avionics system, are recorded simultaneously during the test flights.

A set of location or component specific time invariant high frequency (larger than the main rotor frequency) orthogonal load waveforms are derived by means of principle component analysis of the know load signal. Only the waveforms that capture a significant amount of variance in the load signal are retained.

Knowing a representative simultaneous data stream of the load signal of interest and time corresponding aircraft flight parameters, a (non-linear) statistical data model is generated that correlates a set of aircraft flight parameters, sampled at high frequency, to a set of weight factors that multiply the set of orthogonal waveforms such that the load signal is reproduced with sufficient accuracy after summation of the weighted waveforms. The set of weighting factors is determined at a frequency similar to the main rotor frequency.

An aircraft in the customer fleet is equipped with a small device enabling the (online) recording and processing of aircraft flight information. The set of weights is calculated on-board and real time. This set is transferred to a ground based system for processing.

Documents DE 10 2005 018 123 A1 and US 2012 /0101776 disclose fatigue damage calculation methods in which the fatigue damage values are obtained by comparing actual flight information with referent flight information.

It is an object of the invention to provide for a fatigue management system with an optimized degree of accuracy for the accumulated fatigue damage of at least one aircraft and/or at least one component of said aircraft. It is a further object of the invention to provide for a method of operating said fatigue management system for improved determination of the individual life of said at least one aircraft and/or at least one component of said aircraft.

The solution is provided with a fatigue management system for at least one aircraft with the features of claim 1. A further solution of the invention is provided with a method of operating said fatigue management system of said at least one aircraft with the features of claim 3.

The invention comprises a fatigue management system for determining the individual life of components of at least one aircraft, particularly the individual life of at least one helicopter and/or components of said at least one helicopter. Said fatigue management system comprises at least one data storage with flight data detected during at least one precedent load classification flight at predetermined locations of the aircraft and associated to respective causative operational conditions collected during said classification flight surveys, said flight data representing all of the high frequency of at least 75 Hz component load signal time history and the simultaneous at least 3 Hz high frequency flight parameters time history of the aircraft's maneuvers performed during said at least one precedent load classification flight out of a Standard Mission Profile for said aircraft. Input means provide said load classification flight data to processing means comprising correlation means for said load classification flight parameters to associate said load classification flight parameters via the respective causative operational conditions collected during said classification flights to the corresponding load data from the at least one precedent load classification flight. Said processing means further comprises truncation means for the load classification flight parameters for truncation into subsequent timeframes with durations ranging from 0.05 sec to 3 sec. Said processing means further comprises determination means for determining maximum and minimum load data from each truncated timeframe and said processing means still further comprises generation means for generating a high frequency fatigue value of each truncated timeframe. Said generation means provides for generating an extremum curve from said maximum and minimum load data from all truncated timeframes. Said fatigue management system further comprises a post processor for determination of the accumulated fatigue damage from all of said high frequency fatigue values and said extremum curve. The inventive fatigue management system allows improved determination of the individual life of said at least one aircraft or components of said at least one aircraft, particularly the individual life of at least one helicopter and/or components of said at least one helicopter. According to the inventive fatigue management system the reconstruction of the full high frequency load signal is bypassed in order to apply standard fatigue damage calculation methods allowing a higher degree of accuracy for the accumulated component fatigue damage. Full high frequency component load signal reconstruction has to be considered as constraining the in essence fatigue damage calculation model. The by-pass effectively allows the statistical model more freedom to optimize for the accumulated component fatigue damage ratio. The inventive fatigue management system is able to accurately take into account the aircraft weight and position of centre of gravity during operation, said parameters having a strong correlation with aircraft loads. For optimized determination of the accumulated fatigue damage the inventive fatigue management system uses no flight regimes, said flight regimes being indifferent versus manoeuvre execution and atmospheric conditions. By avoiding flight regimes inappropriate addition of any low frequency, load cycles due to flight regime misrecognitions are as well avoided. As long as the flight data from the Load Classification Flights are sufficiently representative for all manoeuvres that the aircraft is allowed to perform, according to the invention it is not anymore relevant during which pre-defined flight regimes these flight data are recorded or if these flight regime definitions sufficiently correspond to for example actual pilot behaviour. Since it is required to use a load signal sampled at at least 75 Hz for fatigue damage calculations, the fatigue damage induced by the higher frequencies is accounted for by recognizing the fatigue damage induced by the said load signal during each individual timeframe. Additional load cycles may occur within one timeframe with the same minimum (respectively maximum) load, or a lower minimum (respectively higher maximum) load. Said additional load cycles may be sufficiently large to cause fatigue damage but they would not be taken into account if the extreme occurring loads were only sampled at approximately 1 Hz. By directly recognizing the fatigue damage caused by these additional load cycles, per timeframe, the thus recognized fatigue damage does not account for the load cycles present in the previous and/or next timeframe, whereas this is necessary for proper cycle counting. The additional use of the extreme load sequence sampled at approximately 1 Hz according to the invention is still necessary to ensure conservatism.

According to a preferred embodiment of the invention the recognition of the extreme loads and/or high frequency fatigue damage per timeframe is done by a plurality of heuristic models for correlation, including the training of an Artificial Neural Network and/or a Relevance Vector Machine from the Load Classification Flights data.

According to a further preferred embodiment of the invention the collection of maximum load, minimum load and high frequency equivalent fatigue damage recognition models is provided with preferably on board recording of flight parameter signals, such as pitch, torque , yaw, etc., using data transfer means.

According to a further preferred embodiment of the invention the induced component fatigue damage results from subjecting the component to the high frequency of at least 75 Hz load signal under evaluation.

According to a preferred embodiment of the invention a method of operating a fatigue management system for determining the individual life of components of at least one aircraft, particularly the individual life of at least one helicopter and/or components of said at least one helicopter is accomplished by providing a collection of heuristic models and operating said aircraft by control means for at least one input for customer's flight parameters to said aircraft. At least one data storage is provided with flight data detected during at least one precedent load classification flight at predetermined locations of the aircraft and associated to respective causative operational conditions collected during said classification flight surveys, said flight data representing all of the high frequency component load signal time history and the simultaneous high frequency flight parameters time history of the aircraft's manoeuvres performed during said at least one precedent load classification flight out of a defined standard mission profile. Said load classification flight parameters are correlated by means of a collection of heuristic models to associate said load classification flight parameters via the respective causative operational conditions collected during said classification flights to the corresponding load data from at least one precedent load classification flight for the input of corresponding flight data to the heuristic models. The high frequency flight parameters time history of at least 3 Hz of the heuristic models' input is truncated into subsequent timeframes with durations in the order of 0.05 sec to 3 sec. At a low sampling frequency of 20 Hz to 0.33 Hz information is captured regarding maximum load, minimum load and high frequency fatigue of the high frequency signals of at least 3 Hz during each timeframe of 0.05 s to 3 s. The high frequency of at least 75 Hz component load signals of maximum and minimum load data during each timeframe of 0.05 s to 3 s and additionally said high frequency signals of each corresponding timeframe of high frequency equivalent induced component fatigue damage are pre-processed. The load classification flight parameters are sampled together with the corresponding maximum component load at a low frequency of 20 Hz to 0.33 Hz. Said flight parameters together with the maximum load are statistically correlated to generate a heuristic maximum component load model. The load classification flight parameters together with the corresponding minimum component load are further sampled at a low frequency 20 Hz to 0.33 Hz. Said flight parameters together with the minimum load are further statistically correlated to generate a further heuristic minimum component load model. Said flight parameters with the corresponding, high frequency at least 75 Hz equivalent, induced fatigue damage of the component, sampled at a low frequency of 20 Hz to 0.33 Hz are further statistically correlated to generate a further heuristic fatigue damage model. The full time history of the customer's flight parameters are processed in a low frequency sequence at 20 Hz to 0.33 Hz by the heuristic models for maximum and minimum loads and the high frequency equivalent fatigue damage sustained per sampling period of 0.05 s to 3 s. The sequence of the sustained high frequency of at least 75 Hz equivalent fatigue damage ratios and a, low frequency 20 Hz to 0.33 Hz equivalent, fatigue damage sustained by subjecting the component to a load spectrum resulting from cycle counting of a determined extremum curve through the low frequency 20 Hz to 0.33 Hz sequence of maximum and minimum loads are summed to obtain the accumulated fatigue damage of the component.

A preferred embodiment of the invention is presented by means of the following description with reference to the attached drawings.
Fig. 1 shows a classification helicopter and said helicopter's driveshaft for load sensing according to the state of the art,
Fig. 2 shows a graph of high frequency component load signal processing of the signals detected in Fig. 1 for an on board fatigue management system,
Fig. 3 shows a graph of high frequency flight parameter signals for the fatigue management system,
Fig. 4 shows a graph how high frequency equivalent fatigue damage of each single timeframe is recognized, and
Fig. 5 shows a graph of the fatigue management system according to the invention.

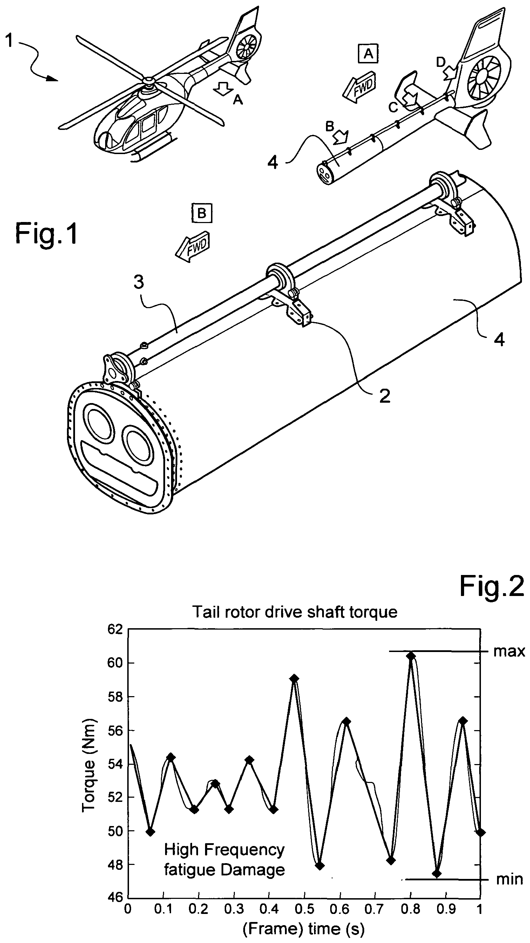

According to Fig. 1 a classification helicopter 1 is equipped with extensive measurement and recording equipment 2 for classification flights that measure and record flight data at a high frequency of at least 75 Hz said flight data comprising load signals induced by the usage of the classification helicopter 1 at components of the classification helicopter 1. The measurement and recording equipment 2 are strain gauges and the component is a fenestron driveshaft 3 of a tail boom 4 of the classification helicopter 1 accurately measuring the torque on the driveshaft 3 and is subjected to said sampling rate of at least 75 Hz during operation of the classification helicopter 1.

For the classification flights the classification helicopter 1 is operated to fly a series of manoeuvres that are together representative for an assumed and conservative Standard Mission Profile. The flown manoeuvres could include all the flight states included in the Standard Mission Profile. During these manoeuvres of the classification flights, the aircraft flight parameters are measured and recorded at the same frequency of at least 75 Hz as the load signals and time synchronous to the load signal recordings. The recorded parameters comprise the classification helicopter's angle of attack, yaw rate, vertical acceleration, engine torque and collective position, etc. and said recorded parameters are read out from an on-board Avionics System (not shown) as flight data presented as a dataset from the classification flights.

Consequently from the classification flights a dataset with flight data is available that includes time synchronous recordings at a high frequency of at least 75 Hz of the load signals, such as the load signals at the fenestron driveshaft 3, with the corresponding aircraft flight parameters that are representative for the defined Standard Mission Profile.

The dataset comprises structured sets of coefficients taking into account the interaction of detected loads at components of the classification helicopter and said coefficients comprising factors for maximum loads, minimum loads and fatigue damage of registered signals.

According to Figure 2 the high frequency component load signals at at least 75 Hz, i. e. the torque at the fenestron driveshaft 3 of a tail boom 4, are processed to yield timeframe, of length 0.05s to 3s, extreme loads and high frequency of at least 75 Hz equivalent induced component fatigue damage, resulting from subjecting the component to the high frequency of at least 75 Hz load signal under evaluation.

Determination means (not shown) are provided for determining maximum component load data together with the corresponding load classification flight parameters, e. g. the component being the fenestron drive shaft, sampled at a low frequency of 20 Hz to 0.33 Hz. A plurality of heuristic models are generated that correlate these load classification flight parameters with the corresponding maximum component loads to a dataset including the training of an artificial neural network.

Said determination means (not shown) are provided for determining minimum component load data together with the corresponding load classification flight parameters, e. g. the component being the fenestron drive shaft, sampled at a low frequency of 20 Hz to 0.33 Hz. Plurality of heuristic models are generated that correlate these flight parameters with the corresponding minimum component loads to a dataset by including the training of an artificial neural network.

Said determination means (not shown) are provided for determining the high frequency equivalent timeframe fatigue damage data together with the corresponding load classification flight parameters, e. g. the component being the fenestron drive shaft, sampled at a low frequency of 20 Hz to 0.33 Hz. A plurality of heuristic models are generated that correlate these flight parameters with the corresponding high frequency equivalent timeframe fatigue damage to a dataset by including the training of an artificial neural network and/or a Relevance Vector Machine.

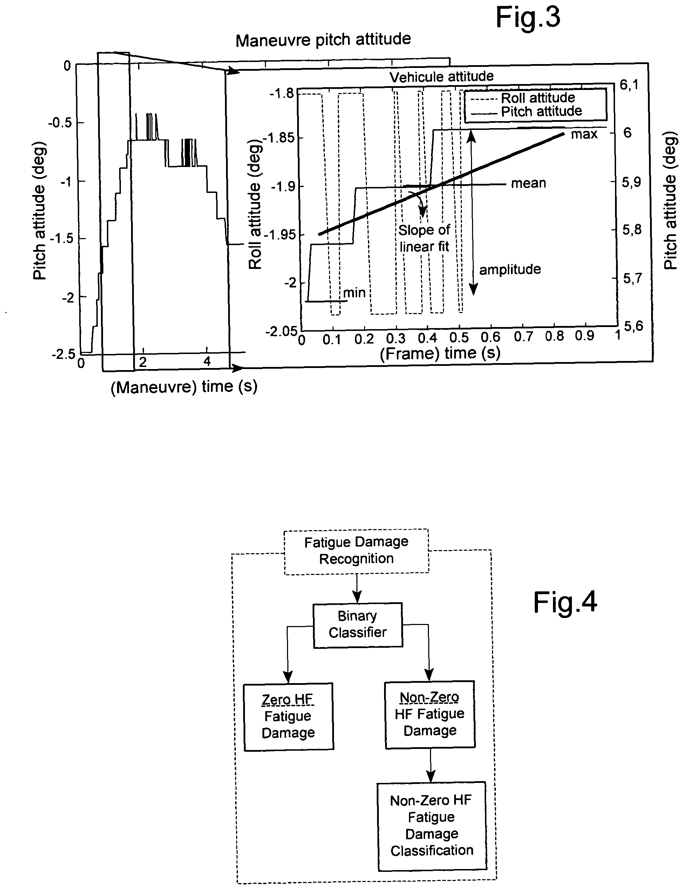

According to Fig. 3 a customer's helicopter (not shown) with a fatigue management system comprises on board control means (not shown) as input for customer flight parameters to operate said customer's helicopter. The heuristic model input is truncated by processing means into subsequent timeframes of small duration of 0.05s - 1s - 3s, with 0.05 s corresponding to a lower bound, 1 s corresponding to a best mode and 3 s corresponding to an upper bound of said timeframes.

Said dataset from the classification flights is correlated to the high frequency of at least 3 Hz time history of the aircraft flight parameters of said customer's helicopter with the processing means of said fatigue management system. The customer's helicopter time history of flight parameters is optionally sampled to at least 3 Hz.

Said customer flight parameters are input to the collection of heuristic models to associate said customer flight parameters via the respective causative operational conditions collected during said classification flights to the corresponding load data and fatigue damage data from the at least one precedent load classification flight.

The high frequency signals of customer flight parameters of at least 3 Hz during each timeframe are thus processed into a structured set of coefficients. Said structured set is processed to yield a maximum load value, a minimum load value and a high frequency fatigue value. Processing is done through the models as generated from the dataset from the load classification flights. Said models operate upon the mean, extreme and linear gradient of the high frequency of at least 3 Hz flight parameters of the customer's helicopter.

According to Figure 4 the high frequency equivalent fatigue model is presented by means of a chart representative of how high frequency equivalent fatigue damage of each single timeframe is recognized. Knowing the flight parameters of the load classification flight's helicopter together with the corresponding, high frequency equivalent, induced fatigue damage of the component of interest, e.g. the fenestron drive shaft 3 sampled at a low frequency, a plurality of heuristic models are generated for correlation, including the training of an Artificial Neural Network and/or a Relevance Vector Machine.

The chart for the high frequency fatigue model is a two-step model. In a first step any load to a component is classified in a binary classifier for determination whether said load causes zero high frequency fatigue damage (Zero HF Fatigue Damage) or if it causes any high frequency fatigue damage (Non-Zero HF Fatigue Damage).

The first step of classification of the fatigue damage recognition is accomplished by a heuristic model, such as a Support Vector Machine or Relevance Vector Machine, resulting in a binary classification into timeframes inducing and not inducing any high frequency equivalent fatigue damage.

The second step is the further classification of the loads of timeframes classified by the heuristic model as inducing high frequency equivalent fatigue damage in a Non-Zero HF Fatigue Damage Classification. Said further classification could be done by an Artificial Neural Network to give the high frequency equivalent fatigue damage sustained per timeframe for a component, e.g. the fenestron drive shaft 3.

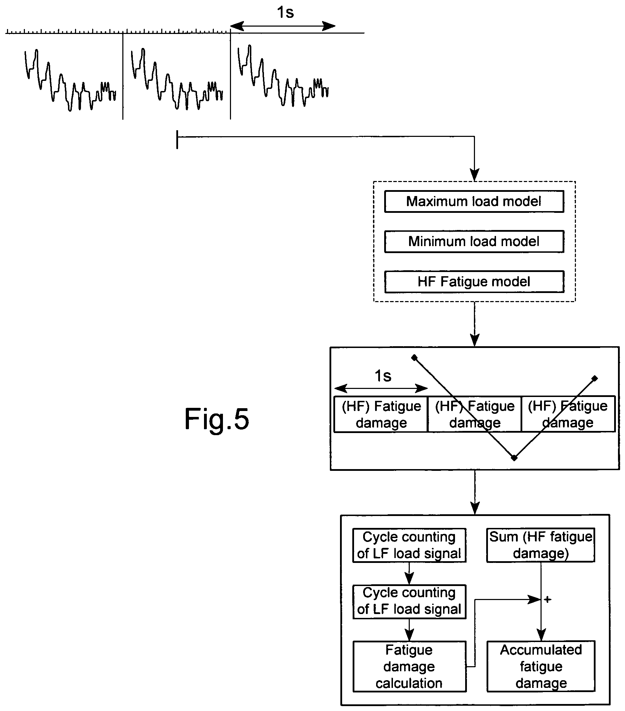

According to Fig. 5 the fatigue management system is provided with the full time history of the flight parameters of the customer's helicopter. Said full time history is truncated into timeframes of 1 sec, of which three subsequent timeframes of 1 sec are shown. Said parameters in each timeframe comprise the helicopter angle of attack, yaw rate, vertical acceleration, engine torque and collective position, etc., according to Fig. 3. Said aspect of the fatigue management system is presented in the top line of the chart of Fig. 5.

Subsequently respective maximum and minimum load values acting upon a component of the customer's helicopter are determined and generation means are provided for generating a high frequency fatigue damage value (HF fatigue model) corresponding to a high frequency of at least 75 Hz equivalent sustained fatigue damage per truncated timeframe as described for Fig. 4 and an extremum curve through the sequence of maximum and minimum loads.

The recognized extremum curve represents the load history sampled at 1 Hz.

A post processor is provided for determination of an accumulated fatigue damage of a component of the customer's helicopter, e. g. the fenestron drive shaft. Said post processor processes said high frequency fatigue values and said extremum curve resulting from the truncated timeframes to obtain the accumulated fatigue damage by summation of the sequence of, high frequency equivalent, sustained fatigue damage values and the, low frequency equivalent, fatigue damage value sustained by subjecting the component of the customer's helicopter, e. g. the fenestron drive shaft, to the load spectrum resulting from cycle counting of the determined extremum curve through the low frequency sequence of maximum and minimum loads.

## Claims

1. A fatigue management system for determining the individual life of components of at least one aircraft, particularly the individual life of at least one helicopter and/or components of said at least one helicopter, said fatigue management system comprising:
- control means for at least one input for customer's flight parameters to operate said aircraft,
- at least one data storage with flight data detected during at least one precedent load classification flight at predetermined locations of the aircraft and associated to respective causative operational conditions defined by a series of manoeuvres during said classification flights, said flight data representing all of the at least 75Hz high frequency component load signal time history and the simultaneous, synchronously recorded, high frequency load classification flight parameters time history of the aircraft's manoeuvres performed during said at least one precedent load classification flight out of a defined standard mission profile, and
- input means for providing said flight data to processing means with correlation means for said customer's flight parameters to associate said customer's flight parameters, via the respective causative operational conditions defined by a series of manoeuvres during said classification flights, to the corresponding at least 75Hz load data and fatigue damage data computed from said load data from the at least one precedent load classification flight, said processing means comprising truncation means for the customer's flight parameters for truncation into subsequent timeframes between 0.05s and 3s, said processing means further comprising determination means for determining maximum and minimum load data from said at least 75Hz load data in each truncated timeframe and said processing means still further comprising generation means for generating a high frequency fatigue damage value from said fatigue damage data in each truncated timeframe and for generating an extremum curve from said maximum and minimum load data from all truncated timeframes, and
- said fatigue management system further comprising a post processor adapted for the determination of an accumulated fatigue damage obtained by the summation of said high frequency fatigue damage values and the low frequency fatigue damage value obtained from the timeframe sequence of maximum and minimum load data of said extremum curve.

2. The system according to claim 1,
**characterized in that** for generation of the high frequency fatigue damage value and/or maximum and minimum load data a plurality of heuristic models are generated for correlation, including the training of an Artificial Neural Network and/or a Relevance Vector Machine.

3. A method of operating a fatigue management system for determining the individual life of components of at least one aircraft according to any of the preceding claims, particularly the individual life of at least one helicopter and/or components of said at least one helicopter, by
- operating said aircraft by control means for at least one input for a customer's flight parameters to said aircraft,
- providing at least one data storage with flight data detected during at least one precedent load classification flight at predetermined locations of the aircraft and associated to respective causative operational conditions defined by a series of manoeuvres during said classification flight surveys, said flight data representing all of the at least 75Hz high frequency component load signal time history and the simultaneous, synchronously recorded, high frequency load classification flight parameters time history of the aircraft's manoeuvres performed during said at least one precedent load classification flight out of a defined standard mission profile,
- correlating said load classification flight parameters to associate said customer's flight parameters, via the respective causative operational conditions defined by a series of manoeuvres during said classification flights, to the corresponding load data and fatigue damage data computed from said load data from the at least one precedent load classification flight,
- inputting said corresponding flight data to processing means,
- truncating the high frequency load classification flight parameters time history into subsequent timeframes between 0.05s and 3s,
- capturing at a low sampling frequency, between 0.33Hz to 20Hz corresponding to each timeframe of 0.05s-3s, information regarding maximum load, minimum load and high frequency fatigue value of the at least 75Hz high frequency load signals synchronously recorded to said high frequency load classification flight parameters
- pre-processing the at least 75Hz high frequency component load signals of maximum and minimum load during each timeframe,
- additionally pre-processing said high frequency signals of each corresponding timeframe of high frequency equivalent induced component fatigue damage from said high frequency fatigue value,
- sampling the load classification flight parameters together with the corresponding minimum component load at a low frequency;
- statistically correlating said load classifcation flight parameters together with the maximum load to generate a non-linear statistical maximum component load heuristic model,
- further statistically correlating said load classification flight parameters together with the minimum component load to generate a further non-linear statistical minimum component load heuristic model,
- further sampling the load classification flight parameters together with the corresponding minimum component load at a low frequency;
- generating a still further non-linear statistical high frequency equivalent fatigue damage heuristic model correlating said load classification flight parameters with the corresponding, high frequency equivalent, induced fatigue damage of the component, sampled at a low frequency between 0.33Hz and 20Hz,
- processing a full time history of customer's flight parameters, in a low frequency sequence between 0.33Hz and 20Hz for determining maximum and minimum loads and the high frequency equivalent fatigue damage sustained per sampling period of 0.05s-3s, by using the non-linear statistical data heuristic models and
- summing of the sequence of the sustained high frequency equivalent fatigue damage values and a low frequency equivalent, fatigue damage sustained by subjecting the component to a load spectrum resulting from cycle counting of a determined extremum curve through the 0.33Hz-20Hz low frequency sequence of maximum and minimum loads from the timeframes between 0.05s and 3s to obtain the accumulated fatigue damage of the component.

4. The system according to claim 3,
**characterized by** recording the flight parameters at least 3 Hz.

## Patentansprüche

1. Ermüdungsverwaltungssystem zur Bestimmung der individuellen Lebensdauer von Komponenten mindestens eines Luftfahrzeugs, insbesondere der individuellen Lebensdauer von mindestens einem Hubschrauber und/oder Komponenten des mindestens einen Hubschraubers, wobei das Ermüdungsverwaltungssystem aufweist:
- Steuermittel für mindestens eine Eingabe von Kundenflugparametern zum Steuern des Luftfahrzeugs;
- mindestens einen Datenspeicher mit Flugdaten, die während mindestens eines vorausgegangenen Lastklassifizierungsflugs an vorbestimmten Stellen des Luftfahrzeugs erfasst wurden und mit jeweiligen ursächlichen Betriebsbedingungen in Verbindung gebracht wurden, die durch eine Reihe von Manövern während des Klassifizierungsflugs definiert wurden, wobei die Flugdaten alle von dem mindestens 75 Hz-Hochfrequenz-Komponentenlastsignal-Zeitverlauf und dem gleichzeitig synchron aufgezeichneten Hochfrequenz-Lastklassifizierungsflugparameter-Zeitverlauf der Luftfahrzeugmanöver darstellen, die während des mindestens einen vorhergehenden Lastklassifizierungsflugs aus einem definierten Standardeinsatz-Profil durchgeführt wurden, und
- Eingabemittel zum Liefern der Flugdaten an Verarbeitungsmittel mit Korrelationsmitteln für die Kundenflugparameter, um die Kundenflugparameter über die jeweiligen ursächlichen Betriebsbedingungen, die durch eine Reihe von Manövern während des Klassifizierungsflugs definiert wurden, mit den entsprechenden mindestens 75 Hz-Lastdaten und Ermüdungsschadensdaten zu verknüpfen, die aus den Lastdaten des mindestens einen vorgehenden Lastklassifizierungsflugs berechnet wurden, wobei die Verarbeitungsmittel Trunkierungsmittel für die Kundenflugparameter aufweisen, zur Trunkierung in aufeinanderfolgende Zeitrahmen zwischen 0,05 s und 3 s, wobei die Verarbeitungsmittel ferner Bestimmungsmittel aufweisen zum Bestimmen der maximalen und minimalen Lastdaten aus den mindestens 75 Hz-Lastdaten in jedem trunkierten Zeitrahmen und wobei die Verarbeitungsmittel ferner Erzeugungsmittel aufweisen zum Erzeugen eines Hochfrequenz-Ermüdungsschadenswerts aus den Ermüdungsschadensdaten in jedem trunkierten Zeitrahmen und zum Erzeugen einer Extremkurve für die maximalen und minimalen Lastdaten von allen trunkierten Zeitrahmen, und
- wobei das Ermüdungsverwaltungssystem ferner einen Postprozessor aufweist, der ausgebildet ist zur Bestimmung eines akkumulierten Ermüdungsschadens, der erhalten wird durch die Summierung der Hochfrequenz-Ermüdungsschadenswerte und der Niederfrequenz-Ermüdungsschadenswerte, die erhalten werden aus der Zeitrahmensequenz der maximalen und minimalen Lastdaten der Extremkurve.

2. System nach Anspruch 1,
**dadurch gekennzeichnet, dass**
zur Erzeugung des Hochfrequenz-Ermüdungsschadenswertes und/oder der maximalen und minimalen Lastdaten eine Mehrzahl heuristischer Modelle zur Korrektur erzeugt werden, welche das Trainieren eines künstlichen neuralen Netzwerks und/oder einer Relevanzvektormaschine umfassen.

3. Verfahren zum Betrieb eines Ermüdungsverwaltungssystems zur Bestimmung der individuellen Lebensdauer von Komponenten mindestens eines Hubschraubers nach einem der vorstehenden Ansprüche, insbesondere der individuellen Lebensdauer von mindestens einem Hubschrauber und/oder Komponenten des mindestens einen Hubschraubers, durch
- Steuern des Luftfahrzeugs durch Steuermittel für mindestens eine Eingabe von Kundenflugparametern des Luftfahrzeugs,
- Vorsehen mindestens eines Datenspeichers mit Flugdaten, die während mindestens einem vorgehenden Lastklassifizierungsflug an vorbestimmten Stellen des Luftfahrzeugs erfasst wurden und mit jeweiligen ursächlichen Betriebsbedingungen, die durch eine Reihe von Manövern während der Klassifizierungsfluguntersuchungen definiert wurden, verknüpft wurden, wobei die Flugdaten alle von dem mindestens 75 Hz-Hochfrequenz-Komponentenlastsignal-Zeitverlauf und dem gleichzeitig synchron aufgenommenen Hochfrequenz-Lastklassifizierungsflugparameter-Zeitverlauf der Luftfahrzeugmanöver, die während des mindestens einen vorhergehenden Lastklassifizierungsflugs aus einem definierten Standardeinsatz-Profil aufgezeichnet wurden, darstellen,
- Korrelieren der Lastklassifizierungsflugparameter mit den zugehörigen Kundenflugparametern über die jeweiligen ursächlichen Betriebsbedingungen, die durch eine Reihe von Manövern während der Klassifizierungsflüge definiert wurden, mit den entsprechenden Lastdaten und Ermüdungsschadensdaten, die aus den Lastdaten des mindestens einen vorausgegangenen Lastklassifizierungsflugs berechnet wurden,
- Eingeben der entsprechenden Flugdaten in Verarbeitungsmittel,
- Trunkierung des Hochfrequenz-Lastklassifizierungsflugparameter-Zeitverlaufs in aufeinanderfolgende Zeitrahmen zwischen 0,05 s und 3 s,
- Erfassen mit einer niedrigen Sampling-Frequenz zwischen 0,33 Hz bis 20 Hz entsprechend jedem Zeitrahmen von 0,05 s bis 3 s von Informationen, die die maximale Last, die minimale Last und den Hochfrequenz-Ermüdungswert der mindestens 75 Hz-Hochfrequenz-Lastsignale, die synchron mit den Hochfrequenz-Klassifizierungsflugparametern aufgezeichnet wurden, betreffen,
- Aufbereiten der mindestens 75 Hz-Hochfrequenz-Komponentenlastsignale der maximalen und der minimalen Last während eines jeden Zeitrahmens,
- zusätzliches Aufbereiten der Hochfrequenzsignale eines jeden entsprechenden Zeitrahmens des hochfrequenzäquivalent-induzierten Komponentenermüdungsschadens aus dem Hochfrequenz-Ermüdungswert,
- Sampling der Lastklassifizierungsflugparameter zusammen mit der zugehörigen minimalen Komponentenlast bei einer niedrigen Frequenz,
- statistisches Korrelieren der Lastklassifizierungsflugparameter zusammen mit der maximalen Last, um ein nicht-lineares statistisches heuristisches Modell einer Maximum-Komponentenlast zu erzeugen,
- ferner statistisches Korrelieren der Lastklassifizierungsflugparameter zusammen mit der Minimum-Komponentenlast, um ein weiteres nicht-lineares statistisches heuristisches Modell einer Minimum-Komponentenlast zu erzeugen,
- ein weiteres Sampling der Klassifizierungsflugparameter zusammen mit der entsprechenden Minimum-Komponentenlast bei niedriger Frequenz,
- Erzeugen noch eines weiteren nicht-linearen statistischen heuristischen Modells eines hochfrequenzäquivalenten Ermüdungsschadens, welches die Lastklassifizierungsflugparameter mit dem entsprechenden Hochfrequenzäquivalent korreliert, wobei der induzierte Ermüdungsschaden der Komponente bei einer niedrigen Frequenz zwischen 0,33 Hz und 20 Hz gesampelt wird,
- Verarbeiten eines vollständigen Zeitverlaufs der Kundenflugdaten in einer Niederfrequenzsequenz zwischen 0,33 Hz und 20 Hz zur Bestimmung der maximalen und der minimalen Lasten und des hochfrequenzäquivalenten Ermüdungsschadens, erhalten in Sampling-Perioden von 0,05 s bis 3 s durch Anwendung der nicht-linearen statistischen heuristischen Modelle von Daten und
- Aufsummierung der Sequenz von erhaltenen hochfrequenzäquivalenten Ermüdungsschadenswerten und eines Niederfrequenzäquivalents, wobei ein Ermüdungsschaden erhalten wird durch das Aussetzen einer Komponente einem Lastspektrum, das sich aus einer Zykluszählung einer vorbestimmten Extremalkurve durch die 0,33 Hz- bis 20 Hz-Niederfrequenzsequenz der maximalen und minimalen Lasten aus den Zeitrahmen zwischen 0,05 s und 3 s ergibt, um den akkumulierten Ermüdungsschaden der Komponente zu erhalten.

4. System nach Anspruch 3,
**gekennzeichnet durch**
Aufnehmen der Flugparameter bei mindestens 3 Hz.

## Revendications

1. Système de suivi de fatigue pour déterminer le cycle de vie individuel de composants d'au moins un aéronef, en particulier le cycle de vie individuel d'au moins un hélicoptère et/ou de composants dudit au moins un hélicoptère, ledit système de suivi de fatigue comprenant :
- un moyen de commande pour au moins une unité de saisie de paramètres de vol d'un client pour faire fonctionner ledit aéronef,
- au moins une unité de stockage de données contenant les données de vol relevées durant au moins un vol préalable de classification de charge en des points prédéterminés de l'aéronef et respectivement associées à des causes sous conditions opérationnelles définies par une série de manoeuvres de vol durant lesdits vols de classification, lesdites données de vol représentant la chronologie du signal d'effort du composant à la fréquence élevée d'au moins 75 Hz et, enregistrée de façon synchronisée et simultanée, la chronologie des paramètres du vol de classification de charge à fréquence élevée des manoeuvres de vol de l'aéronef exécutées durant ledit au moins un vol préalable de classification de charge issu d'un profil de mission standard défini, et
- un moyen de saisie pour fournir lesdites données de vol à un moyen de traitement pourvu de moyens de corrélation pour lesdits paramètres de vol du client, afin d'associer lesdits paramètres de vol du client, via les causes sous conditions opérationnelles respectives définies par l'une des séries de manoeuvres durant lesdits vols de classification, aux données d'effort à au moins 75 Hz et aux données relatives à la détérioration liée à la fatigue correspondantes calculées à partir desdites données d'effort du au moins un vol de classification d'effort préalable, ledit moyen de traitement comprenant un moyen de troncature des paramètres pour les paramètres de vol du client, pour tronquer en des périodes de temps successives comprises entre 0,05 et 3 secondes, ledit moyen de traitement comprenant en outre un moyen de détermination pour déterminer les données d'effort maximales et minimales à partir desdites données d'effort à au moins 75 Hz dans chaque période tronquée et ledit moyen de traitement comprenant en outre un moyen de génération pour produire une valeur de détérioration liée à la fatigue à fréquence élevée à partir desdites données de détérioration liée à la fatigue dans chaque période tronquée et générer une courbe d'extremum à partir desdites données d'effort minimales et maximales de toutes les périodes découpées, et
- ledit système de suivi de fatigue comprenant en outre un post-processeur apte à déterminer une détérioration liée à la fatigue accumulée obtenue par le calcul desdites valeurs de détérioration liées à la fatigue et enregistrées à fréquence élevée et desdites valeurs de détérioration liées à la fatigue à fréquence basse obtenues à partir de la période de temps des données d'effort minimales et maximales de ladite courbe d'extremum.

2. Système selon la revendication 1,
**caractérisé en ce que** pour générer la valeur de détérioration liée à la fatigue à fréquence élevée et/ou de la valeur des données d'effort minimales et maximales, plusieurs modèles heuristiques sont créés pour la corrélation, incluant notamment l'entraînement par apprentissage d'un Réseau Neuronal Artificiel (Artificial Neural Network) et/ou d'une Machine de vecteur de pertinence (Relevance Vector Machine).

3. Procédé d'utilisation du système de suivi de fatigue pour déterminer le cycle de vie individuel de composants d'au moins un aéronef selon l'une quelconque des revendications précédentes, particulièrement le cycle de vie individuel d'au moins un hélicoptère et/ou de composants dudit au moins un hélicoptère, en:
- faisant fonctionner ledit aéronef à l'aide de moyens de commande pour au moins une saisie des paramètres de vol du client dans ledit aéronef,
- mettant à disposition d'au moins une unité de stockage des données de vol relevées au cours d'au moins un vol préalable de classification de charge en des points prédéterminés de l'aéronef et respectivement associées aux causes sous conditions opérationnelles définies par une série de manoeuvres durant lesdites études de vols de classification, lesdites données de vol représentant l'ensemble de la chronologie du signal d'effort du composant à fréquence élevée d'au moins 75 Hz et, enregistrée de façon synchronisée et simultanée, la chronologie des paramètres du vol de classification de charge à fréquence élevée des manoeuvres de l'aéronef exécutées durant ledit au moins un vol préalable de classification de charge issu d'un profil de mission standard défini,
- mettant en corrélation desdits paramètres de vol du client afin d'associer lesdits paramètres de vol du client, via les causes sous conditions opérationnelles respectives définies par une série de manoeuvres durant lesdits vols de classification, aux données d'effort correspondantes et aux données sur la détérioration liée à la fatigue calculées à partir desdites données d'effort, depuis le au moins un vol de classification de charge précédent,
- saisissant lesdites données de vol correspondantes dans un moyen de traitement,
- tronquant la chronologie des paramètres de vol de classification de charge à fréquence élevée en des périodes de temps successives de 0,05 à 3 secondes,
- capturant, à une fréquence d'échantillonnage basse, comprise entre 0,05 Hz et 20 Hz correspondant à chaque période de temps de 0,05 à 3 secondes, des informations relatives sur l'effort maximal, l'effort minimal et sur la valeur de fatigue à fréquence élevée des signaux d'efforts à la fréquence élevée d'au moins 75Hz enregistrés de façon synchronisée pour lesdits paramètres de vol de classification d'efforts à fréquence élevée,
- prétraitant des signaux d'effort des composants à la fréquence élevée d'au moins 75Hz de charge maximaux et minimaux au cours de chaque période de temps,
- réitérant le prétraitement desdits signaux à fréquence élevée de chaque période correspondante de l'équivalent en fréquence élevée provoqué par les détériorations du composant liées à la fatigue à partir de ladite valeur de fatigue à fréquence élevée,
- échantillonnant des paramètres de vol de classification de charge avec l'effort minimal correspondant du composant à une fréquence basse ;
- mettant en corrélation statistique desdits paramètres du vol de classification de charge avec l'effort maximal pour créer un modèle heuristique d'effort maximal de composant, statistique et non linéaire,
- mettant en corrélation statistique, en outre, desdits paramètres du vol de classification de charge avec l'effort minimal pour créer un modèle heuristique d'effort minimal de composant statistique et non linéaire,
- échantillonnant en outre, des paramètres de vol de classification d'efforts avec l'effort minimal correspondant du composant à une fréquence basse,
- générant en outre, un modèle heuristique, statistique et non linéaire des détériorations liées à la fatigue équivalent en fréquence élevée mettant en corrélation lesdits paramètres du vol de classification de charge avec la détérioration induite par la fatigue du composant correspondante équivalente en fréquence élevée échantillonnés à une fréquence basse entre 0,33 Hz et 20 Hz, l'équivalent à la fréquence élevée correspondant provoqué par les détériorations liées à la fatigue du composant, recueilli à fréquence basse entre 0,33 Hz et 20 Hz,
- traitant d'une chronologie complète des paramètres de vol du client au sein d'une séquence à fréquence basse comprise entre 0,33 Hz et 20 Hz pour déterminer les efforts maximaux et minimaux et l'équivalent à fréquence élevée des détériorations liées à la fatigue subies par périodes de temps de 0,05 et 3 secondes échantillonnées à l'aide des modèles heuristiques de données statistiques et non linéaires,
- calculant de la séquence des valeurs des détériorations par fatigue subies en équivalent à fréquence élevée et de la détérioration par fatigue en équivalent de fréquence basse en soumettant le composant à une gamme d'effort provenant du nombre de cycles d'une courbe d'extremum déterminée par le biais d'une séquence de fréquence basse de 0,33 Hz à 20 Hz de charge maximaux et minimaux des périodes de temps de 0,05 à 3 secondes pour obtenir la détérioration par fatigue cumulée du composant.

4. Système selon la revendication 3,
**caractérisé par** l'enregistrement des paramètres de vol à au moins 3Hz.
